# EUROPEAN PATENT APPLICATION

(11) **EP 2 704 210 A1**
(43) Date of publication of application: **05.03.2014**
(21) Application number: 12182649.9
(22) Date of filing: 31.08.2012
(51) Int. Cl.: H01L 31/048, H01L 31/042

(54) **Solar roof tile**

(71) Applicant: Heering Kunststof Profielen B.V., 7701 SG Dedemsvaart (NL)
(72) Inventor: Janssen, Bob, 7701 SG Dedemsvaart (NL)
(74) Representative: van Essen, Peter Augustinus

(57) **Abstract**

The invention provides a solar roof tile for a sloped roof with regular overlapping of similar solar roof tiles, said solar roof tile comprising a roof tile and a solar panel, said solar roof tile having an upstream end which in use is positioned closest to a ridge of a roof and a downstream end which in use is positioned closest to the eave of a roof, and having at its upstream end a headlap part that in use is overlapped by a lower part of a similar solar roof tile, said solar roof tile comprising a deepened part in said roof tile in which said solar panel is attached, said solar roof tile comprising at least a set of side gutters between said solar panel and said roof tile running at least from the headlap end to the downstream end of the solar panel, said side gutters fluidly coupled to at least one fluid channel that exits at the downstream end of the roof tile.

## Description

### Field of the invention

The invention relates to a solar roof tile, a solar roof of said solar roof tiles, a roof tile designed for use for such a solar roof tile, and a solar panel designed for such a solar rood tile.

### Background of the invention

WO2012/078491 discloses roof tile systems including a solar panel tile which has a cavity with a solar panel mounted within the cavity. In order to prevent the opportunity for water to flow under a neighbouring tile, raised drip barriers are provided on the surface of the tile.

### Summary of the invention

It is an aspect of the invention to provide an alternative solar roof tile that is durable and preferably weathering resistant. In another or further aspect, the solar roof tile is leak tight, more in particular leak tight during its (long) period of outdoor use and exposure to the elements.

The invention thus provides a solar roof tile for a roof sloped roof of regular overlapping, similar solar roof tiles, said solar roof tile comprising a roof tile and a solar panel, said solar roof tile having an upstream end which in use is positioned closest to a ridge of a roof and a downstream end which in use is positioned closest to the eave of a roof, and having at its upstream end a headlap part that in use is overlapped by a lower part of a similar solar roof tile, said solar roof tile comprising a deepened part in said roof tile in which said solar panel is attached, said solar roof tile comprising at least a set of side gutters between said solar panel and said roof tile and running at least from the headlap end to the downstream end of the solar panel, said side gutters fluidly coupled to at least one fluid channel that exits at the downstream end of the roof tile.

The roof tile that form part of the solar roof tile is in an embodiment moulded from a composite comprising polymer material. In particular, the roof tile is moulded from a polymer material with a high content of filler material, for instance silicate material and/or lime stone. In particular, the filler content is higher than 50% by weight. Specifically, the filler content is higher than 70% by weight. The filler can be simple sand, or lime stone, chalk, or other inorganic material. The polymer material amongst others binds the inorganic filler and may comprise thermoplastic material. An example of these thermoplastic materials is PE, PP, PET, or a combination thereof. Part may be recycled. The material provides a durable material that was found to satisfy the needs for outdoor use under the exposure of the elements.

The solar panel used in the solar roof tile is based upon one or more photovoltaic cells that generate electrical power. These can be conventional silicon-based mono or multi crystalline cells, (silicon based) thin-film cells, but also other types of cells known to a skilled person. Usually, these photovoltaic cells are not free-standing, but are supported by carrying layers. Often, the photovoltaic cells are included between plates, at least one of them being transparent to at least visible light. Often, glass plates are used for that purpose.

Often, roof tiles are used on a pitched roof that has a slope. Such a pitched roof has a highest point, the ridge. In a tilled roof, the ridge is often a central ridge that is covered by ridge tiles. A tiled roof furthermore has a lowest point, the eave of the roof that often ends in a roof gutter. A tiled roof may further have a valley, and verges and hips that end the roof vertically. Roof tiles may also be used on other types of roofs that have a sloped surface, like for instance a skillion roof (at a higher slope angle), a hip roof, gablet roof or a pyramid roof. The sloped roof may have a slope larger than 15 degrees. In am embodiment, the slope is more than 25 degrees. Often, the slope is below 80 degrees. More in particular, the slope is below 60 degrees.

The terms "upstream" and "downstream" is in this document relative to the propagation of (rain) water that runs down the solar roof tiles on a tiled roof. Water runs down from the ridge to the lowest point of a tiled roof, the eave. The solar roof tile has an upstream end which in used on a sloped roof is closest to the ridge, and a downstream end that in use is closest to the eave.

In order to provide a water barrier, roof tiles are provided on a roof in an overlapping manner. Often, the lower part of an upper (upstream) roof tile overlaps the upper part of a downstream roof tile. The upper part of the downstream roof tile that is covered is called the headlap. For most roof tiles, the headlap can be between 5-50 % of the length of a roof tile. It should be as little as possible in order to reduce the number of roof tiles that are needed on a roof, but it should be enough to prevent water leakage. In case of conventional slates, headlap may also be defined as the amount of overlap past the nails that fix the slate to the roof. In this document, headlap is defined as the amount of overlap, or the overlapping region.

Often, in order to fix roof tiles more securely and prevent water leakage, roof tiles also have a sidelap. To that end, a special side part may be designed which is overlapped by a neighbouring roof tile. The side part may have grooves or other provisions that "hook" behind similar provisions at the back surface of the neighbouring roof tile.

In the past, in roof tiles provided with solar panels, it was tried to seal the boundary between a roof tile and a solar panel as well as possible. In some of the known solar roof tiles, there were for instance sealing strips covering that boundary, or sealant was used at that boundary. It was found, however, that it was a problem to completely seal the boundary as the capillary effect draws in water through very small slits. It was found that climate conditions then break down the sealing properties.

In an embodiment, the solar roof tile further comprises a lower gutter along the downstream end of the solar panel and between said solar panel and said roof tile, said lower gutter in fluid communication with said side gutters and fluidly coupled to at least one fluid channel that exits at the downstream end of the roof tile.

In an embodiment, said side gutters and said lower gutter are part of a circumferential gutter surrounding said solar panel.

In an embodiment, said fluid channel exits at or near the downstream edge of said roof tile.

In an embodiment, said fluid channel comprises at least one hole in said lower gutter part and/or in the downstream ends of said side gutters and running through said roof tile and opening to a back surface of said roof tile, in particular said at least one hole is provided in a bottom of said lower circumferential gutter part and/or said side gutters.

In an embodiment, at least parts of a back surface of the solar panel are attached to surface parts of the roof tile in the deepened part, in particular said solar panel is adhered using an adhesive, more in particular using at least one adhesive strip.

In an embodiment, the solar panel is attached to said roof tile along its circumference at the back surface of said solar panel, in particular attached using a closed, circumferential adhesive strip in said deepened part.

In an embodiment, said deepened part provides a closed bottom rim at the circumference of and below the solar panel, more in particular extending within fixing locations where the solar panel is fixed to the roof tile.

In an embodiment, said side gutters have a width of between 4-8 mm, and/or a depth of between 6-12 mm.

In an embodiment, said holes in said circumferential gutter have a minimum diameter of 3 mm.

In an embodiment, said solar panel is flush with a front surface of said roof tile. In an embodiment, a surface area of said deepened part is larger than a surface area of said solar panel such that a groove remains between said roof tile and solar panel when it is mounted centrally in said deepened part.

In an embodiment, said roof tile is made from a composite material comprising a polymer material and an inorganic filler, in particular said solid content is more than 50 % by weight.

In an embodiment, said solar roof tile is further provided with an inner gutter provided in the deepened part of the roof tile and below the solar panel, said inner gutter fluidly coupled to a fluid channel exiting in said downstream end of said roof tile.

In an embodiment, said inner gutter comprises a pair of inner side gutters provided substantially parallel to the side gutters below the solar panel, in particular further inward with respect to fixing parts where the solar panel is attached to the roof tile

In an embodiment, at least one of said fluid channels of said inner gutter is a fluid channel of said side gutters or said lower gutter when present.

In an embodiment, said inner gutter comprises a lower inner gutter part that is in fluid communication with said fluid channel.

In an embodiment, said inner gutter is provided within the boundaries of the adhesive strip when present.

The invention further pertains to a solar roof system comprising a plurality of solar roof tiles of the type described in this document, and wherein downstream ends of said solar roof tiles overlap the headlap of downstream solar roof tiles, and wherein said at least one fluid channel of upstream solar roof tile exits at least at the headlap of downstream solar roof tiles.

The invention further pertains to a roof tile, designed for the solar roof tile described in this document and having one or more of the features of the roof tile of this document.

The invention further pertains to a solar panel, designed for the solar roof tile described in this document and having one or more of the features of the solar panel of this document.

The term "substantially" herein, such as for instance in in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices or system herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

The invention further applies to a solar roof tile and/or solar roof comprising one or more of the characterising features described in the description and/or shown in the attached drawings.

The various aspects discussed in this patent can be combined in order to provide additional advantages. Furthermore, some of the features can form the basis for one or more divisional applications.

### Brief description of the drawings

Embodiments of the invention will now be described, by way of example only, with reference to the accompanying schematic drawings in which corresponding reference symbols indicate corresponding parts, and in which:
Figure 1 depicts an embodiment of a solar roof tile in 3D front view;
Figure 2A shows several similar solar roof tiles of figure 1 forming part of a solar roof;
Figure 2B shows figure 2A in side view;
Figure 3 shows the solar roof tile of figure 1 in rear view;
Figure 4 shows a detail of an upper part of the solar roof tile of figure 1;
Figure 5 shows a detail of a lower part of the solar roof tile of figure 1;
Figure 6 shows a cross sectional view of two solar roof tiles interlocked and overlapping;

The drawings are not necessarily on scale

### Description of preferred embodiments

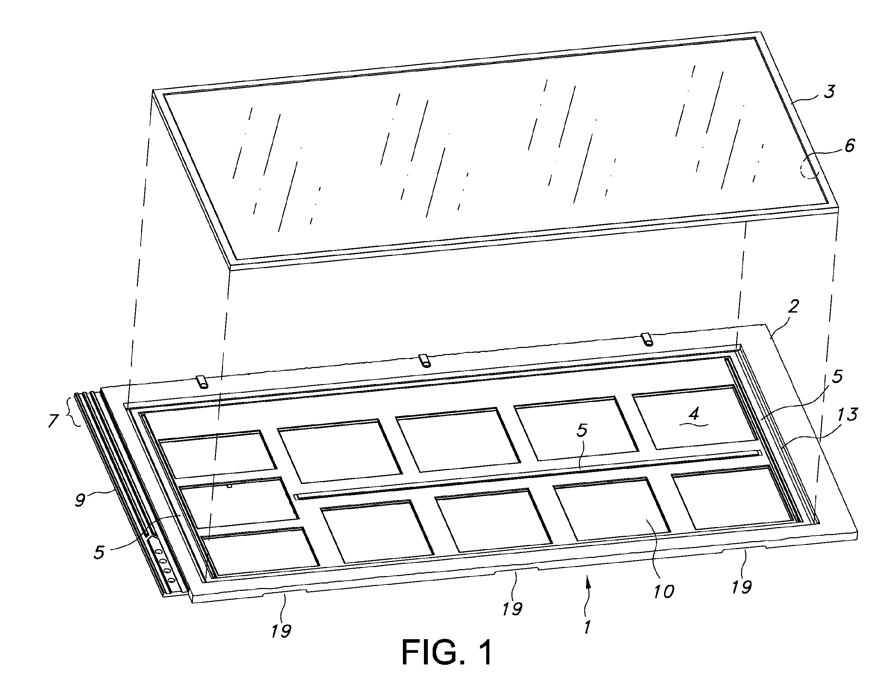

Figure 1 schematically depicts an 3D front view of a solar roof tile 1 with a roof tile 2 and a solar panel 3 removed and positioned above it in an exploded view. The roof tile 2 has a deepened part 4 in which solar panel 3 can be fitted. The deepened part 4 in fact forms a recess in the surface of the roof tile 2. To fit the solar panel 3, the deepened part 4 may have ribs or one or more attachment surfaces. The rear surface 6 of the solar panel 3 can be fixed on these ribs or attachment surfaces. In an embodiment, strips of adhesive tape 5 can be used for that purpose. Alternatively, for instance upward extending ribs provided with adhesive may be provided.

The solar roof tile 1 is to be used on a sloped roof. The slope usually is comparable to the slope of known roof tiles. To that end, for the solar roof tiles the slope should be at least 15 degrees. More in particular, the slope of a roof with these solar roof tiles should be at least 20 degrees. More in particular, the slope is at least 25 degrees. When a slope is too steep, the solar roof tiles like any other roof tile will lose function. An upper limit to the slope can be 70 degrees. As explained above, in its use on a sloped roof, the solar roof tile has an upstream end and a downstream end. The upstream end is where in figure 1 the reference number 2 is located, and the downstream en is were the reference number 1 is located in figure 1.

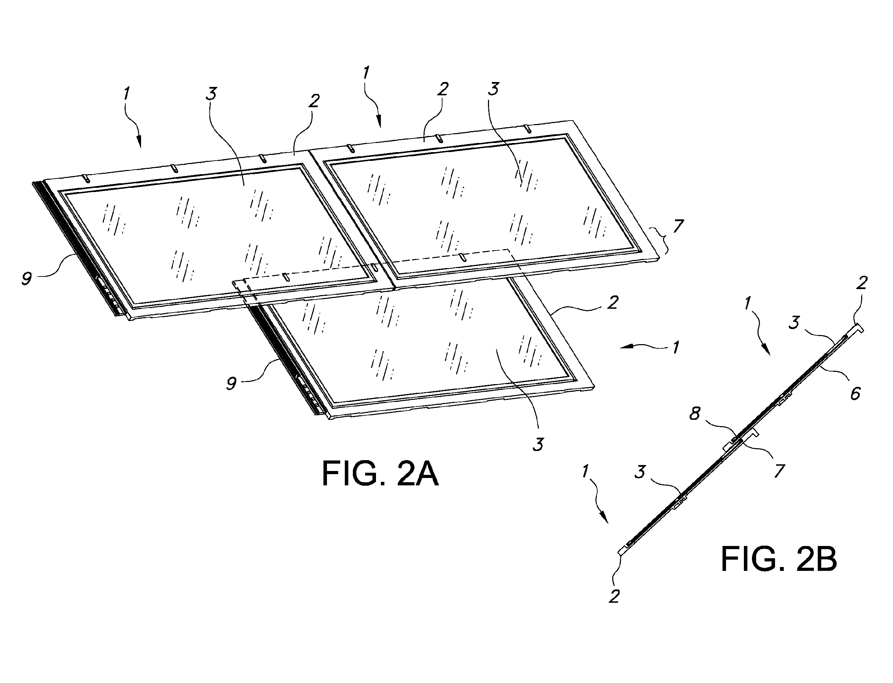

The solar roof tile 1 is used for a solar roof with similar solar roof tiles 2. The solar roof tiles are used in a regular, overlapping manner. Figure 2A shows part of such a solar roof of overlapping, similar solar roof tiles 1 in front view, and figure 2B in side view. Figures 2A and 2B show how a downstream part or downstream end 8 of an upstream solar roof tile 1 overlaps the upstream part or upstream end 7 of a downstream solar roof tile 1. The upstream overlapping strip or end is called headlap 7. In practise, the overlap may run past the upstream end of deepened part 4. Headlap 7 may also comprise part of the upstream end of solar panel 3. In fact, it may overlap 5cm or more.

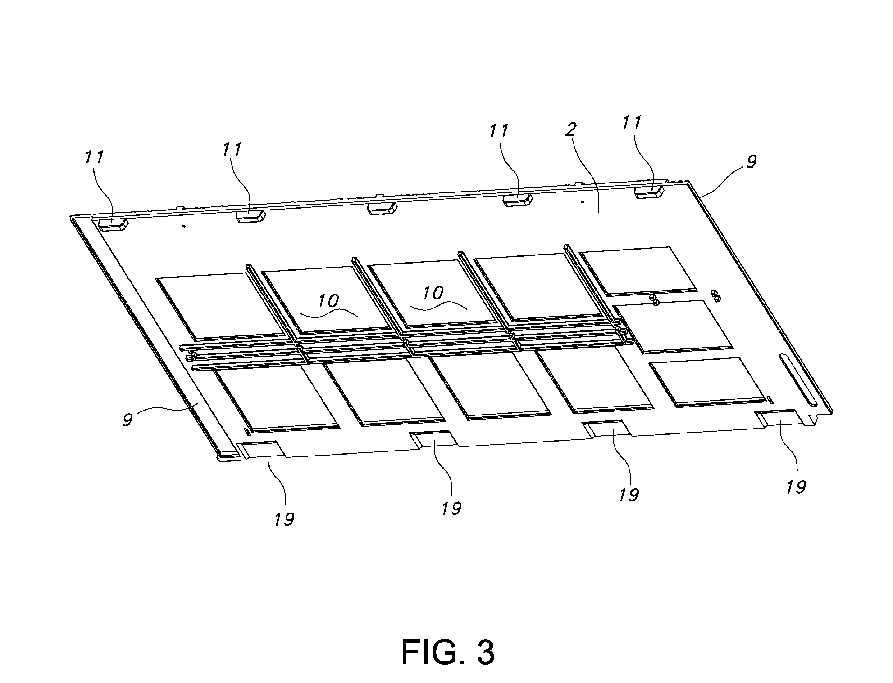

The roof tiles 2 may also overlap at a side. This is called a side lap 9. Side lap 9 of one roof tile has ribs that lock behind grooves 9' at the rear surface of a neighbouring roof tile 1 (see figure 3 for the mirror of the side lap 9 surface details). This aspect as such is well known in roof tiles and can have any other known embodiment.

In figure 3, a rear view (3D again) if the roof tile 2 is shown. The recessed part or deepened part 4 has through openings 10 in order to allow rear cooling of the solar panel 3. The recessed part 4 here provides a closed rim extending below the solar panel 4. In fact, it provides a closed rim extending within the closed circumference if adhesive strip 5. In this embodiment, deepened part 4 is located in the centre of the roof tile 2. It may also be provided at the downstream end. In that embodiment, it may be positioned with the downstream end of the deepened part 4 at the downstream edge of roof tile 2.

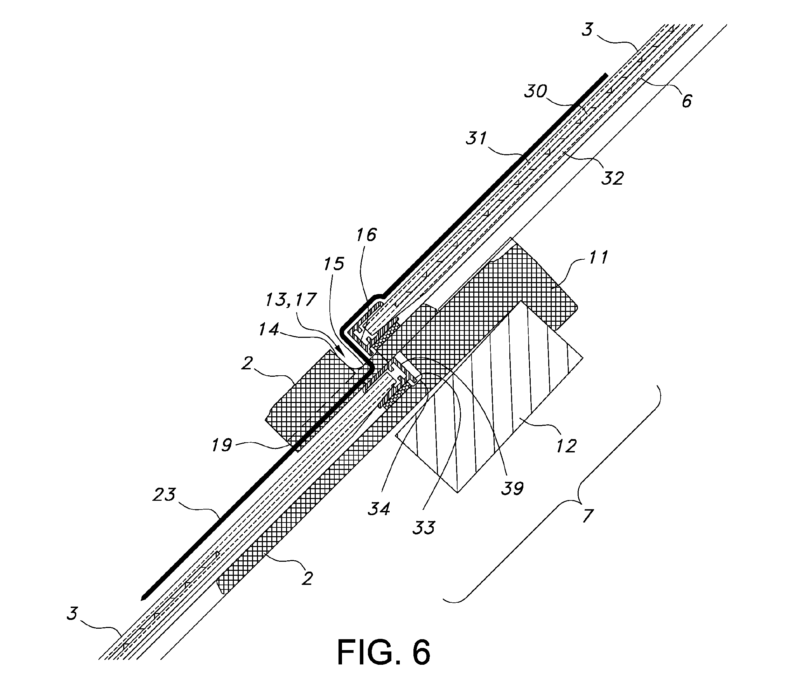

In the embodiment depicted, the roof tile 1 further has hooks 11 on its back surface at the upstream end to allow the roof tile to engage a roof batten 12 (see figure 6). Other known means of engaging roof tile 2 with a roof and/or a roof batten 12 (see figure 6) may be provided, for instance holes for nailing or screwing.

The solar roof tile comprises a gutter neighbouring the solar panel 3. In the drawings, it can be seem that the area of deepened part 4 is larger than the area of solar panel 3. Solar panel 3 is fitted in deepened part 4 in such a way that here a circumferential gutter is provided all around the circumference of solar panel 3. The circumferential gutter comprises two side gutters 13 and a downstream gutter 17. Furthermore, a more narrow upstream gutter is provided to prevent water to remain between the solar panel and the roof tile via capillary action. The side gutter 13, downstream gutter 17 and the upstream gutter are in fluid communication: water may run through the upstream gutter into one or both side gutters 13 en further into lower or downstream gutter 17.

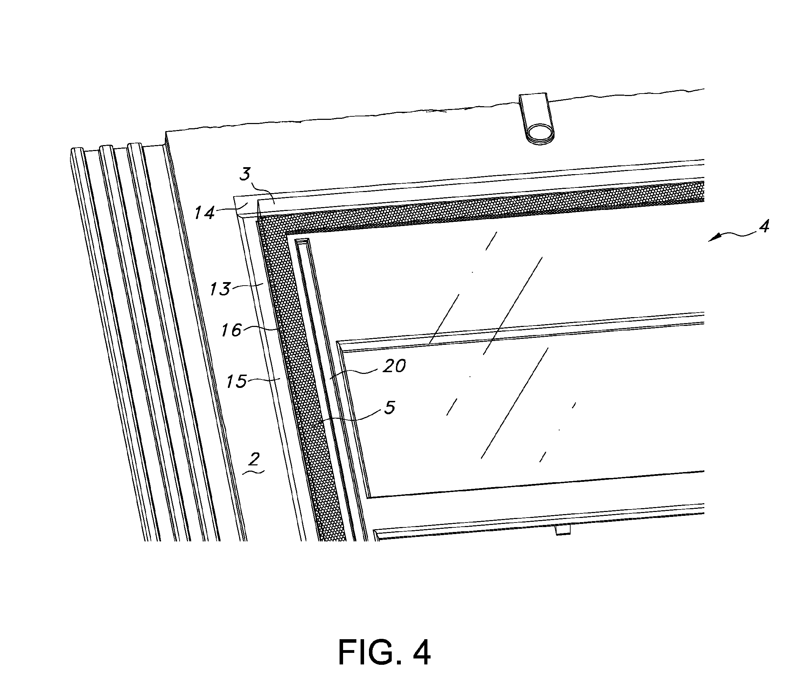

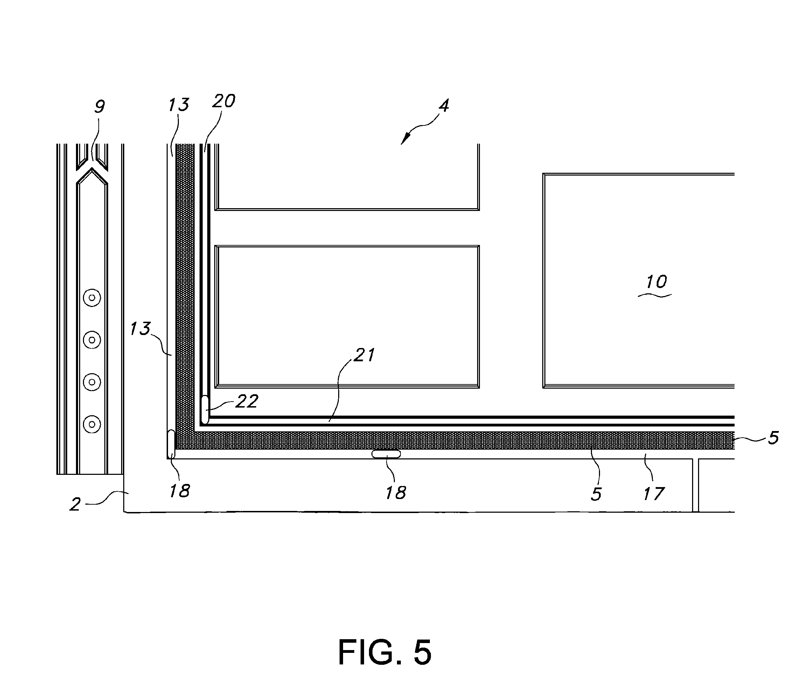

The gutter, here as explained a circumferential gutter, can be seems the best in figures 4 and 5 in detail, and in cross section figure 6. In fact, here a gutter outer side wall 14 is formed by the outer wall of deepened part 4 of roof tile 2. The bottom 15 of gutter 13 is formed by the bottom of deepened part 4. A gutter inner side wall 16 is formed by the outer circumferential side wall of solar panel 3.

In order for water to run down side gutter 13, its width W1 can be between 4-8 mm. In an embodiment, its width can be 5-7 mm. The depth of the side gutter 13 can be 6-12 mm. In an embodiment, the depth is 7-11 mm. The dimensions are large enough to allow water to flow away naturally.

The gutter here further comprises the lower gutter 17 running at or near the downstream end 8 of roof tile 2. Lower gutter 17 here runs along downstream end 8. It here has the same dimensions as the side gutters 13. The gutters are in fluid communication and in fact here form one continuous gutter. The lower gutter 17 and side gutters 13 are here provided with holes 18 allowing water to flow away. In this embodiment, the holes 18 run through the roof tile 2. Here, the holes 18 end or exit or debouch in the downstream end 8, the part that overlaps a lower or downstream roof tile 2. These holes 18 can be have a minimal diameter of 3 mm. The holes 18 need not be round. The holes 18 can best be seen in figure 6. In that embodiment, the elongated hole 18 is about 5-15 mm wide and 50-65 mm long. The hole 18 should be large enough to allow water to flow away.

In this embodiment, a channel 19 is provided in the rear surface of roof tile 2 (figure 1, 3, 6). The channels 19 allows water to drain from side gutter 13 en from lower gutter 17 through holes 18 and through channels 19 on the head lap of a lower or downstream roof tile 2. In an other embodiment, the gutter is provided with a channel that ends in the downstream end 8. In that way, in a solar roof with similar solar roof tiles 1, water runs through side gutter 13 and downstream gutter 17 and flows though holes 18 and other parts of the channel 19 to exit in the head lap 7 of a downstream solar roof tile 1. In fact, it flows on the front surface of the head lap 7.

In particular in figures 4 and 5, it can be seem that the deepened part 4 is here provided with a further, inner gutter. This inner gutter is provided below the solar panel. It provides an additional barrier is water might pass the fixing parts, here a circumferential adhesive strip 5. In order to prevent that water from dripping down for instance on the further roof construction, the inner gutter is provided. The inner gutter is formed by a further deepened groove in the deepened part 4. In this embodiment of figures 4 and 5, the inner gutter runs closed to the adhesive strip 5. It comprises two inner side gutters 20, and may comprise a lower inner gutter 21. Those inner side gutters 20 continue downward and connect to a lower inner gutter 21. Lower inner gutter 21 runs substantially parallel to the lower gutter 17. The lower inner gutter 21 is further provided with channels that exit at the downstream end of roof tile 2. In particular, here the lower inner gutter 21 is provided with holes 22 that run through the roof tile and exit at the back surface of the roof tile. Additionally or alternatively, holes may be provided at the downstream end of inner side gutters 20.

In general, the lower inner gutter 21 is in fluid communication with a channel that exits in the lower end 8 of roof tile 2. In that way, in use, the water will flow out in the headlap or past the headlap of a downstream solar roof tile 1.

The inner gutter can be a little smaller than the gutter. In particular, the inner gutter can have a width W2 of between 3-6 mm. In particular, in order to facilitate sure removal of rainwater, the width can be between 3.5-5.5 mm. The inner gutter can have a depth of 1-4 mm.

The holes 22 can have a smallest diameter of between 3 mm. In an embodiment, the holes are elongated holes having a width of 3-5 mm and a length of 10-25 mm.

The channel 19 is at the same time a channel 19 for the gutter and for the inner gutter. It has a width of 40-80 mm. The height of the channel 19 is between 3 and 7 mm. In particular, its height is between 3 and 5 mm.

In the cross section shown in figure 6, a flow of water 23 is shown.

In figure 6, the solar panel has two layers of plate material 31 and 32 with solar cells sealed between them. The solar panel 3 has a circumferential rim 39. This rim can be made of aluminium. It provides a flat surface for allowing the solar panel 3 to be glued to the roof tile 2. In this embodiment, circumferential rim 39 has a lip 33 reaching in the direction of the back surface 6 of the solar panel 3. Roof tile 2 in the inner region of the gutter, as explained in this embodiment a circumferential gutter, has a groove 34 corresponding with the lip 33. The combined groove 34 and lip 33 provide additional protection of the adhesive layer 5. The thickness or the adhesive strip 5 in this embodiment provides a spacing between the rear or back surface 6 of solar panel 3 and the surface of the deepened part 4 of roof tile 2.

The outer wall of the circumferential rim 39 provides the inner wall 16 of the circumferential gutter. The cross section of figure 6 is at the location of a channe119. In figure 6, it is erroneously dotted. It should have been un-dotted to clearly show that water 23 can run through channel 19.

Figure 6 again shows how in this embodiment the headlap region 7 extends beyond (i.e., further downstream of) the upstream edge or end of deepened part 4 and past the upstream end of solar panel 3. In fact, the headlap 7 can extend at least 5 cm past the upstream edge of the solar panel 3.

In this embodiment, the solar cells 30 do not extend all the way up to the upstream edge (or up to the circumferential rim 39) of the solar panel 3. For reason of the headlap 7.

It will also be clear that the above description and drawings are included to illustrate some embodiments of the invention, and not to limit the scope of protection. Starting from this disclosure, many more embodiments will be evident to a skilled person which are within the scope of protection and the essence of this invention and which are obvious combinations of prior art techniques and the disclosure of this patent.

## Claims

1. A solar roof tile (1) for a roof sloped roof of regular overlapping, similar solar roof tiles (1), said solar roof tile (1) comprising a roof tile (2) and a solar panel (3), said solar roof tile (1) having an upstream end which in use is positioned closest to a ridge of a roof and a downstream end which in use is positioned closest to the eave of a roof, and having at its upstream end a headlap part (7) that in use is overlapped by a lower part (8) of a similar solar roof tile, said solar roof tile (1) comprising a deepened part (4) in said roof tile (2) in which said solar panel (3) is attached, said solar roof tile (1) comprising at least a set of side gutters (13) between said solar panel and said roof tile (2) and running at least from the headlap end to the downstream end of the solar panel (3), said side gutters (13) fluidly coupled to at least one fluid channel (19) that exits at the downstream end of the roof tile (2).

2. The solar roof tile (1) of claim 1, further comprising a lower gutter (17) along the downstream end of the solar panel (3) and between said solar panel (3) and said roof tile (2), said lower gutter (17) in fluid communication with said side gutters (13) and fluidly coupled to at least one fluid channel (19) that exits at the downstream end of the roof tile (2).

3. The solar roof tile (1) of claim 1, wherein said side gutters (13) and said lower gutter 17 are part of a circumferential gutter (13, 17) surrounding said solar panel (3).

4. The solar roof tile (1) of claim 1 or 2, wherein said fluid channel (19) exits at or near the downstream edge of said roof tile (2).

5. The solar roof tile (1) of any one of the preceding claims, wherein said fluid channel (19) comprises at least one hole (18) in said lower gutter (17) and/or in the downstream ends of said side gutters (13) and running through said roof tile (2) and opening to a back surface of said roof tile (2), in particular said at least one hole (18) is provided in a bottom of said lower gutter (17) and/or said side gutters (13).

6. The solar roof tile (1) of any one of the preceding claims, wherein at least parts of a back surface (6) of the solar panel (3) are attached to surface parts of the roof tile (2) in the deepened part (4), in particular said solar panel (3) is adhered using an adhesive, more in particular using at least one adhesive strip (5).

7. The solar roof tile (1) of claim 5, wherein solar panel (3) is attached to said roof tile (2) along its circumference at the back surface (6) of said solar panel (3), in particular attached using a closed, circumferential adhesive strip in said deepened part (4).

8. The solar roof tile (1) of the preceding claims, wherein said deepened part (4) provides a closed bottom rim at the circumference of and below the solar panel (3), more in particular extending within fixing locations where the solar panel (3) is fixed to the roof tile (2), and/or said side gutters (13) and/or said lower gutter (17) have a width of between 4-8 mm, and/or a depth of between 6-12 mm, and/or wherein said holes (18) in said side gutters (13) and/or said lower gutter (17) have a minimum diameter of 3 mm, and/or wherein said solar panel (3) is flush with a front surface of said roof tile (2).

9. The solar roof tile (1) of any one of the preceding claims, wherein a surface area of said deepened part (4) is larger than a surface area of said solar panel (3) such that a groove remains between said roof tile (2) and solar panel (3) when it is mounted centrally in said deepened part (4), and/or wherein said roof tile (2) is made from a composite material comprising a polymer material and an inorganic filler, in particular said solid content is more than 50 % by weight.

10. The solar roof tile (1) according to any one of the preceding claims, further provided with an inner gutter (20) provided in the deepened part (4) of the roof tile (2) and below the solar panel (3), said inner gutter (20) fluidly coupled to a fluid channel exiting in said downstream end of said roof tile (2).

11. The solar roof tile (1) according to claim 10, wherein said inner gutter (20 comprises a pair of inner side gutters (20) provided substantially parallel to the side gutters (13) below the solar panel (3), in particular further inward with respect to fixing parts (5) where the solar panel (3) is attached to the roof tile (2) and/or wherein at least one of said fluid channels of said inner gutter (20) is a fluid channel (19) of said side gutters (13) or said lower gutter (17) when present.

12. The solar roof tile (1) according to any one of the preceding claim10-11, wherein said inner gutter comprises a lower inner gutter part (21) that is in fluid communication with said fluid channel, and/or wherein said inner gutter (20, 21) is provided within the boundaries of the adhesive strip 5 when present.

13. A solar roof system comprising a plurality of solar roof tiles (1) of any one of the preceding claims, wherein downstream ends (8) of said solar roof tiles (1) overlap the headlap (7) of downstream solar roof tiles, and wherein said at least one fluid channel of upstream solar roof tile exits at least at the headlap (7) of downstream solar roof tiles.

14. A roof tile (2), designed for the solar roof tile (3) according to any one of the preceding claims and having the features of the roof tile of any one of the preceding claims.

15. A solar panel (3), designed for the solar roof tile (3) according to any one of the preceding claims and having the features of the solar panel (3) of any one of the preceding claims.
